# EUROPÄISCHE PATENTSCHRIFT

(11) **EP 1 584 446 B1**
(45) Veröffentlichungstag und Bekanntmachung des Hinweises auf die Patenterteilung: **24.06.2009**
(21) Anmeldenummer: 05005087.1
(22) Anmeldetag: 09.03.2005
(51) Int. Cl.: B29C 53/12, B21F 3/02

(54) **Windevorrichtung und Verfahren zur Herstellung von Wendeln aus einem Kunststofffaden**
Winding device and process for producing spiral elements made of synthetic filaments
Dispositif d'enroulement et procédé pour la production d'éléments spirales en filaments synthétiques

(30) Priorität: 05.04.2004 DE 102004017798
(43) Veröffentlichungstag der Anmeldung: 12.10.2005
(73) Patentinhaber: bielomatik Leuze GmbH + Co. KG, 72639 Neuffen (DE)
(72) Erfinder: Rempfer, Michael, 72639 Neuffen (DE)
(74) Vertreter: Thul, Hermann

(56) Entgegenhaltungen:
- EP-A- 1 093 870
- EP-A- 1 199 118
- CA-A1- 2 321 937
- DE-A1- 19 534 189
- DE-B1- 2 837 918
- US-A- 3 669 583
- US-A- 5 875 666

## Beschreibung

Die Erfindung betrifft ein Verfahren nach Anspruch 1 und eine Windevorrichtung nach Anspruch 3 zur Herstellung von Wendeln aus einem Kunststofffaden.

Eine solche Windevorrichtung ist aus der DT 19 44 371 bekannt. Die bekannte Windevorrichtung ermöglicht die Herstellung von Wendeln aus einem thermoplastischen Kunststofffaden. Der Kunststofffaden wird mittels einer Fadenheizeinrichtung innerhalb der Windevorrichtung aufgeheizt und in schraubenlinienförmig gewundene Führungsnuten eingeführt. Mittels eines Fadenkühlers wird der erhitzte Kunststofffaden wieder abgekühlt. Die kurzzeitige Aufheizung führt dazu, dass der Kunststofffaden seine durch die Führungsnuten eingenommen Wendelform nicht elastisch, sondern plastisch einnimmt. Durch die anschließende Abkühlung wird der Kunststofffaden in seiner Wendelform fixiert. Der Kunststofffaden wird somit im heißen Zustand umgeformt und durch Abkühlen in der geschaffenen Wendelform gehalten.

EP-A-1,199,118 zeigt eine Vorrichtung nach dem Oberbegriff von Anspruch 3.

Aufgabe der Erfindung ist es, eine Windevorrichtung und ein Verfahren der eingangs genannten Art zu schaffen, die eine Wendelherstellung ohne externe Energiezufuhr für ein Aufheizen oder Abkühlen der Wendeln ermöglicht.

Diese Aufgabe wird durch die Merkmale von Anspruch 1 oder 3 gelöst.

Durch die erfindungsgemäße Lösung ist es überraschenderweise möglich, einen thermoplastischen Kunststofffaden in Wendelform zu bringen, ohne dass hierzu eine Erhitzung des Kunststofffadens benötigt wird. Vielmehr werden die Wendeln durch Kaltumformung geschaffen. Der Kunststofffaden weist vorzugsweise einen Querschnitt zwischen 0,5 mm und 3 mm Durchmesser auf. Die Kunststoffwendeln können als Schraubenfeder oder auch insbesondere zum Binden von Blattblöcken dienen, die in ihrem Rückenbereich mit entsprechenden Perforierungen versehen sind. Als Materialien für die Kunststoffwendeln sind alle Arten von Thermoplasten, wie PVC, PET, oder auch thermoplastische Elastomere einsetzbar.

In Ausgestaltung der Erfindung ist ein außenseitig an dem Kunststofffaden angreifendes Führungsglied im Bereich eines ersten Windungsganges der Wendel vorgesehen, das relativ zu einer Wendelachse einen größeren Achsabstand aufweist als die Führungsfläche des Umformgliedes, wobei der Achsabstand geringer ist als der Radius der fertiggestellten Wendel. Durch das Führungsglied ist eine stützende Führung im Bereich des Außenumfangs des ersten Windungsganges der herzustellenden Wendel erzielbar. Im Bereich des Umformgliedes erfolgt die starke Kaltumformung des Kunststofffadens. Das Führungsglied gewährleistet die genaue Abstimmung des später zu erzielenden Wendeldurchmessers in abgestimmter Ergänzung zu dem Umformglied. Auch das Umformglied ist so relativ zu dem Kunststofffaden positioniert, dass seine Führungsfläche den Kunststofffaden lediglich im Bereich des Außenumfangs der zu formenden Wendel stützt. Vorteilhaft sind durch die erfindungsgemäße Lösung zylindrische Kunststoffwendeln herstellbar.

In weiterer Ausgestaltung der Erfindung ist das Umformglied mittels einer Ausrückeinrichtung derart beweglich gelagert, dass das Umformglied so weit von der Wendel wegbeweglich ist, dass das Umformglied die Wendel berührungslos freigibt. Vorteilhaft kann ergänzend vorgesehen sein, dass auch das Führungsglied durch die Ausrückeinrichtung von der Wendel entfernbar ist. Durch die beschriebene Ausgestaltung ist gewährleistet, dass während der Wendelherstellung eine entsprechende Umformung gleichmäßig auf den kontinuierlich geförderten Kunststofffaden einwirkt. Sobald der Kunststofffaden nicht mehr weiter gefördert wird, wird das Umformglied und gegebenenfalls auch das Führungsglied von der Wendel entfernt, um eine ungewünschte Verformung des Kunststofffadens im Stillstand der Windevorrichtung zu vermeiden. Für ein erneutes Anlaufen der Windevorrichtung wird das Umformglied und gegebenenfalls das Führungsglied dem Kunststofffaden wieder zugestellt und etwa zeitgleich mit der erfolgenden Stützung des Kunststofffadens auch die Förderung des Kunststofffadens wieder gestartet.

In weiterer Ausgestaltung der Erfindung ist ein Stellglied zum Einstellen einer Steigung der Wendel vorgesehen. Durch das Umformglied und das Führungsglied kann der gewünschte Durchmesser der zu erzeugenden Wendel eingestellt werden. Das Stellglied dient zum Justieren der Steigung der Wendel. Vorzugsweise sind sowohl das Umformglied als auch das Führungsglied und das Stellglied mit entsprechenden Stellantrieben versehen, die durch eine gemeinsame Steuereinheit angesteuert werden. An die Steuereinheit ist vorzugsweise ein Förderantrieb der Einlaufeinheit angeschlossen. Der Stellantrieb für das Umformglied ist der Ausrückeinrichtung zugeordnet. Falls das Führungsglied ebenfalls durch die Ausrückeinrichtung betätigbar ist, kann das Führungsglied durch den gemeinsamen Stellantrieb der Ausrückeinrichtung bewegt werden. Der Förderantrieb der Einlaufeinheit und ein entsprechender Stellantrieb für die Ausrückeinrichtung sind vorzugsweise derart miteinander gekoppelt, dass bei einem Stillstand des Förderantriebs die Ausrückeinrichtung das Umformglied und gegebenenfalls das Führungsglied von dem Kunststofffaden entfernt und entsprechend umgekehrt bei einem Starten des Förderantriebs das Umformglied und gegebenenfalls das Führungsglied wieder in die Ausgangslage zurückbewegt werden. Die Steuereinheit weist vorzugsweise einen Datenspeicher auf, in dem Daten für unterschiedliche Wendelgrößen und -steigungen, unterschiedliche Kunststoffmaterialien und unterschiedliche Herstellgeschwindigkeiten abgelegt sind, um eine Steuerung oder Regelung entsprechender Herstellvorgänge für unterschiedliche Wendeln zu ermöglichen. Vorzugsweise ist die Windevorrichtung zur Herstellung von zylindrischen Wendeln vorgesehen. In gleicher Weise können aber auch konisch sich verjüngende oder konisch sich erweiternde Wendeln hergestellt werden, falls während des Herstellungsprozesses das Umformglied und das Führungsglied in ihrer Stellung entsprechend verändert werden.

In weiterer Ausgestaltung der Erfindung weist die Einlaufeinheit ein Einlaufrollenpaar auf, das den Kunststofffaden transportiert, wobei wenigstens eine Einlaufrolle mit einer Anlagefläche mit hohem Reibungskoeffizient versehen ist. Diese Ausgestaltung berücksichtigt, dass Kunststofffäden bei zu hohen Anpresskräften der Einlaufrollen in ihrem Querschnitt verformt würden. Dies wäre unerwünscht. Dadurch, dass im Bereich der Anlagefläche, die zur Förderung des Kunststofffadens dient, ein erhöhter Reibungskoeffizient vorgesehen ist, ist bei reduzierter Anpresskraft dennoch ein ausreichendes Transportmoment erzielbar.

Ein wesentlicher Vorteil der erfindungsgemäßen Lösung ist es, dass die Windevorrichtung sowohl zur Herstellung von Kunststoffwendeln als auch zur Herstellung von Wendeln aus Metalldraht, insbesondere Stahldraht, eingesetzt werden kann.

In weiterer Ausgestaltung der Erfindung weist die Anlagefläche einen Reibbelag auf. Die Anlagefläche erstreckt sich über den gesamten Umfang der Einlaufrolle und ist wenigstens in dem Ringbereich vorgesehen, in den der Kunststofffaden an der Einlaufrolle anliegt. Als Reibbelag kann entweder eine fest mit der Einlaufrolle verbundene Beschichtung oder auch ein lösbar oder unlösbar mit der Einlaufrolle verbundener Bezug oder Belag vorgesehen sein.

In weiterer Ausgestaltung der Erfindung ist die Anlagefläche durch eine mechanische Oberflächenprofilierung gebildet. Hier kann insbesondere eine Rändelung vorgesehen sein, um eine mechanische Aufrauung der Anlagefläche zu erzielen.

In weiterer Ausgestaltung der Erfindung ist wenigstens eine Einlaufrolle orthogonal zu der Fadentransportachse beweglich gelagert, und der Einlaufrolle ist eine Kraftsteuereinrichtung zugeordnet, die eine einstellbare Anpresskraft der Einlaufrolle auf den Faden ausübt. Durch die Kraftsteuereinrichtung ist es möglich, die Anpresskraft der Einlaufrolle auf unterschiedliche Fadendurchmesser der Kunststofffäden oder unterschiedliche Kunststoffmaterialien abzustimmen.

In weiterer Ausgestaltung der Erfindung ist eine Blattbindevorrichtung vorgesehen, die Mittel zum schraubenartigen Eindrehen von Fadenwendeln in Perforierungen von Blattrücken aufweist, und die Blattbindevorrichtung ist derart benachbart zu der Windevorrichtung positioniert, dass ein Aufnahmebereich der Blattbindevorrichtung, dem die Eindrehmittel zugeordnet sind, in koaxialer Verlängerung zu einem Wendelformbereich der Windevorrichtung angeordnet ist. Dadurch ist es möglich, die hergestellten Wendeln in einem einzigen Arbeitsvorgang kontinuierlich in entsprechende Blattblöcke einzubinden. Die schraubenartige Herstellung der Wendeln ermöglicht ausgangsseitig des Wendelformbereiches direkt ein Einschrauben dieser Wendel in Blattrücken eines Blattblockes, um eine Blockbindung von losen Blättern zu erzielen. Die entsprechende Wendel wird abgelängt, sobald sie vollständig in den Rücken des Blattblockes eingedreht ist. Nun kann der entsprechend gebundene Blattblock entfernt und durch einen weiteren, noch zu bindenden Blattblock ersetzt werden. Die Ausgestaltung ist zeitsparend, da in einem Arbeitsgang sowohl die Wendelherstellung als auch die Einbindung der Wendel in einen entsprechenden Blattblock erreicht wird.

Um neben einer automatischen Wendelherstellung auch eine automatische Einbindung der Wendeln in entsprechende Blattblöcke erzielen zu können, sind vorzugsweise Sensormittel vorgesehen, die die Blattrückenlänge und die Lage der Perforierungen erfassen. Mittels einer Steuereinheit werden die erfassten Daten verarbeitet und zum einen zur Einstellung von Wendeldurchmesser und Wendelsteigung im Bereich der Windevorrichtung und zum anderen zur Aktivierung einer Trenneinheit eingesetzt, mittels der eine geeignete Ablängung der Wendeln erreicht wird.

Die Steuereinheit ist vorzugsweise so ausgelegt, dass Einflussgrößen auf den Wendeldurchmesser der herzustellenden Kunststoffwendel wie Einzugsgeschwindigkeit der Einzugswalzen, Durchmesser des Kunststofffadens, mechanische Eigenschaften des Kunststofffadens, wie insbesondere Zugfestigkeit, Bruchdehnung und ähnliches, und andere Daten berücksichtigt werden.

Zur Lösung der eingangs genannten Aufgabe ist es zudem erfindungsgemäß bei einem Verfahren zur Herstellung von Kunststoffwendeln vorgesehen, die Kunststoffwendeln durch kontinuierliche Kaltumformung aus wenigstens einem Kunststofffaden herzustellen. Gegenüber bekannten Verfahren, bei denen eine Erhitzung und anschließende Abkühlung der Kunststoffwendeln benötigt wird, ist dieses Verfahren zeit- und kostensparend.

In weiterer Ausgestaltung der Erfindung wird der Kunststofffaden bei seiner Umformung in Umfangsrichtung ausschließlich außen geführt. Bei bekannten Verfahren zur Herstellung von Kunststoffwendeln wird der Kunststofffaden um einen Dorn gewickelt und damit an seinem Innenumfang gestützt. Erfindungsgemäß erfolgt die Stützung und damit Kaltumformung ausschließlich im Bereich des Außenumfangs der Wendelgänge. Zusätzlich erfolgt eine Stützung zur Definition einer Steigung der Wendel seitlich eines Querschnitts des Kunststofffadens. Die vorhandene Elastizität der Kunststofffäden gewährleistet, dass während der Wendelherstellung permanent eine außenseitige Anlage und Führung des jeweiligen Kunststofffadens erreicht wird.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch eine Ausführungsform einer erfindungsgemäßen Windevorrichtung und
- Fig. 2: schematisch in vergrößerter Darstellung in einer Draufsicht eine hergestellte Wendel und eine nachfolgende Einbindung in einen Blattblock innerhalb einer Blattbindevorrichtung.

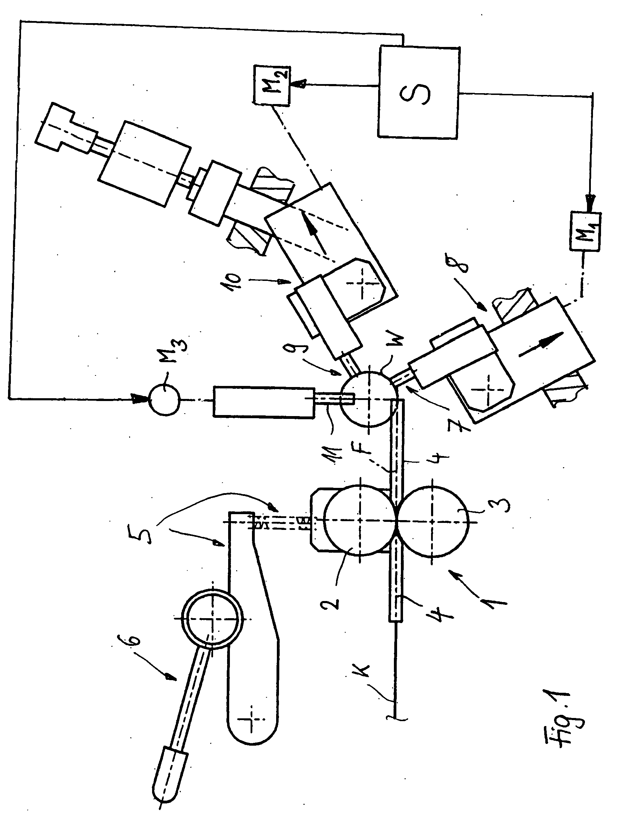

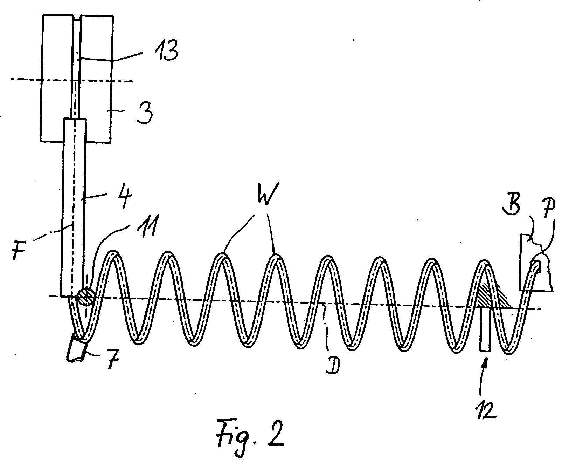

Eine Windevorrichtung zur Herstellung von Kunststoffwendeln weist eine Einlaufeinheit 1 auf, mittels der ein Kunststofffaden K zu einem Wendelformbereich transportiert wird. Der Kunststofffaden K wird endlos von einer nicht näher dargestellten Vorlagerolle abgezogen und in einen geradlinigen Zuführkanal 4 eingeführt. Der Zuführkanal 4 bildet ein geschlossenes Hohlprofil, dessen freier Querschnitt lediglich geringfügig größer ist als ein Fadenquerschnitt des Kunststofffadens K. Dadurch kann der Kunststofffaden K durch den Zuführkanal 4 hindurch geradlinig gefördert werden. Der Zuführkanal 4 ist in zwei Kanalabschnitte unterteilt, die - in Fadenlaufrichtung gesehen - vor und hinter einem Einlaufrollenpaar 2, 3 positioniert sind. Das Einlaufrollenpaar 2, 3 dient dazu, den Kunststofffaden K kontinuierlich in den Wendelformbereich hinein zu fördern. Wenigstens eine der beiden Einlaufrollen 2, 3 ist mit einem nicht näher bezeichneten Antrieb, vorzugsweise einem Elektromotor, versehen. Beim dargestellten Ausführungsbeispiel ist der Kunststofffaden K durch den Zuführkanal 4 hindurch horizontal zu dem Wendelformbereich gefördert. Eine entsprechende Fördertransportachse F verläuft gemäß Fig. 1 in der Zeichnungsebene. Eine in Fig. 1 nicht näher bezeichnete Wendelachse, die eine imaginäre Rotationsachse für die Schraubbewegung bei der Herstellung einer Wendel W definiert, verläuft orthogonal zu der Fadentransportachse F in die Zeichnungsebene hinein. In Fig. 2 ist die Wendelachse mit dem Bezugszeichen D versehen.

Die beiden Einlaufrollen 2 greifen oberhalb und unterhalb des Kunststofffadens K an diesem an. Die obere Einlaufrolle 2 ist mit einer Kraftsteuereinrichtung 5, 6 versehen, um eine Anpresskraft der oberen Einlaufrolle 2 auf den Kunststofffaden K einstellen zu können. Als Stellglied ist bei der Ausführung nach Fig. 1 ein mechanischer Stellhebel 6 in Form eines Exzenters vorgesehen, um eine entsprechende Veränderung der Anpresskraft zu bewirken. In gleicher Weise kann ein elektrischer, pneumatischer oder hydraulischer Stellantrieb vorgesehen sein. Wenigstens eine der beiden Einlaufrollen 2, 3 ist im Bereich ihrer Anlagefläche 13 (Fig. 2), die ringnutförmig ausgeführt ist, mit einem gegenüber der übrigen Oberfläche der Einlaufrolle 2 erhöhten Reibungskoeffizienten versehen. Dies kann durch ein Aufrauen der Oberfläche der Einlaufrolle 2, 3 im Bereich der Anlagefläche 13 erfolgt sein. Das Aufrauen kann durch eine Rändelung oder eine anders gestaltete mechanische Aufrauung erzielt werden. Alternativ ist es möglich, die erhöhte Reibung der Anlagefläche 13 durch einen Reibbelag, insbesondere in Form einer Beschichtung oder eines Bezuges, zu schaffen.

Unmittelbar hinter einem Auslaufbereich des in Fadentransportrichtung hinteren Kanalabschnitts ist ein Umformglied 7 positioniert, das mit seiner nicht näher bezeichneten Führungsfläche eine Umlenkung des Kunststofffadens K nach oben und damit eine entsprechende Kaltumformung des Kunststofffadens K bewirkt. Vorzugsweise ist die Führungsfläche nut- oder rinnenartig gestaltet, um eine exakte Führung des Kunststofffadens K zu bewirken und ein seitliches Ausweichen des Kunststofffadens K zu verhindern. Um dem Kunststofffaden K die notwendige Wendelsteigung zu geben, ist ein Stellglied 11 vorgesehen, das nach Art eines Fingers dem Kunststofffaden K durch seitliche Stützung und Führung eine Neigung aufzwingt, die die gewünschte Steigung entsprechender Windungsgänge bei der kontinuierlichen Förderung des Kunststofffadens K bewirkt. Zur verbesserten Führung und Stützung des Kunststofffadens K ist in Fadenlaufrichtung nach dem Umformglied 7 ein Führungsglied 9 vorgesehen, das zu der Wendelachse D einen größeren radialen Abstand aufweist als das Umformglied 7. Das Führungsglied 9 ist in Umfangsrichtung der herzustellenden Wendel W versetzt zu dem Umformglied 7 angeordnet. Zudem ist das Führungsglied 9 auch in Axialrichtung der Wendelachse D zu dem Umformglied 7 geringfügig versetzt, um dem durch das Stellglied 11 erzwungenen Steigungswinkel zu folgen.

Das Umformglied ist relativ zu der Fadentransportachse F so stark angestellt, dass der Kunststofffaden K eine relativ starke Umlenkung im Bereich des Umformgliedes 7 erfährt. Der so für den anlaufenden Kunststofffaden K gebildete Krümmungsradius ist größer als ein Querschnittsradius des Kunststofffadens K, jedoch gleichzeitig wesentlich kleiner als ein endgültiger Krümmungsradius der fertiggestellten Wendel W. Durch das Kunststoffmaterial weist der Kunststofffaden K eine relativ hohe Rückfederkraft auf, so dass die Wendel W im Bereich des Umformgliedes 7 und des Führungsgliedes 9 kleiner geformt werden muss als es für ihre endgültigen Durchmesser benötigt wird. Dadurch, dass das Führungsglied 9 einen größeren Radialabstand zur Wendelachse D aufweist als das Umformglied 7, wirkt das Führungsglied 9 für den Kunststofffaden K lediglich begrenzend und nicht aktiv umformend, wie dies durch das Umformglied 7 geschieht. Das Führungsglied 9 ist in seinem radialen Abstand anhand vorgegebener Einstelldaten auf den radialen Abstand des Umformgliedes 7 zur Wendelachse D abgestimmt, damit jeweils gewährleistet ist, dass die starke Kaltumformung des Kunststofffadens K im Bereich des Umformgliedes 7 erfolgt und die anschließende Stützung und Aufrechterhaltung einer geeigneten Wendelkrümmung und -spannung durch das Führungsglied 9 erfolgen kann.

Dem Umformglied 7 ist eine Ausrückeinheit 8 zugeordnet. Auch dem Führungsglied 9 ist eine Ausrückeinheit 10 zugeordnet. Die beiden Ausrückeinheiten 8, 10 dienen dazu, das Umformglied 7 bzw. das Führungsglied 9 radial nach außen zu bewegen und so das Umformglied 7 bzw. das Führungsglied 9 von dem Kunststofffaden K bzw. der Wendel W zu entfernen. Jede Ausrückeinheit 8, 10 weist einen vorzugsweise elektromotorischen Stellantrieb M₁, M₂ auf, die neben einem entsprechenden Ausrückvorgang auch eine entgegengesetzte Zustellbewegung steuern. Das Stellglied 11 ist mit einem Stellantrieb M₃ versehen, mittels dessen das Stellglied 11 achsparallel zur Wendelachse D verstellbar ist, um die gewünschte Steigung einstellen zu können.

Alle drei Stellantriebe M₁, M₂, M₃ sind an eine zentrale Steuereinheit S angeschlossen, die eine koordinierte Ansteuerung der verschiedenen Stellantriebe M₁ bis M₃ bewirkt. Die Steuereinheit S weist in nicht näher dargestellter Weise hierzu einen Datenspeicher auf, in dem für unterschiedliche Wendeldurchmesser und unterschiedliche Wendelsteigungen wie auch für unterschiedliche Durchmesser des Kunststofffadens K, für unterschiedliche Materialeigenschaften des jeweiligen Kunststofffadens K und für unterschiedliche Fördergeschwindigkeiten des Kunststofffadens K verschiedene Einstellwerte für die entsprechenden Stellantriebe M₁ bis M₃ abgespeichert sind. Die Ansteuerung der einzelnen Stellantriebe durch die Steuereinheit S kann durch ein vorgegebenes Programm erfolgen. Es ist auch möglich, eine Regelung des Wendelherstellvorganges durch entsprechende Istwertabfragen physikalischer Daten der Stellantriebe und des Förderantriebes der Einlaufeinheit 1 zu erreichen. Vorzugsweise ist somit auch der Förderantrieb der Einlaufeinheit 1 wie auch die Kraftsteuereinrichtung im Bereich der Einlaufeinheit 1 an die Steuereinheit S angeschlossen, um einen automatisch gesteuerten Wendelherstellprozess erreichen zu können.

Bei einem nicht dargestellten Ausführungsbeispiel der Erfindung ist dem Umformglied 7 und dem Führungsglied 9 eine gemeinsame Ausrückeinheit zugeordnet. Alternativ sind zwei Ausrückeinheiten vorgesehen, die vorzugsweise mittels einer gemeinsamen, mechanischen Steuereinrichtung betätigbar sind.

In der Steuereinheit S ist zudem ein Steuerprogramm abgelegt, das zwangsläufig eine Verstellung des Führungsgliedes 9 und des Umformgliedes 7 und damit der entsprechenden Ausrückeinheiten 8, 10 abhängig von der Aktivierung oder Deaktivierung des Förderantriebes der Einlaufeinheit 1 bewirkt. Hierdurch ist gewährleistet, dass bei einem Stillsetzen des Förderantriebs und demzufolge einem Abbremsen des Kunststofffadens K das Umformglied 7 und vorzugsweise auch das Führungsglied 9 außer Eingriff zu dem Kunststofffaden K gebracht werden. Ungewünschte Verformungen des Kunststofffadens K im Stillstand werden hierdurch vermieden. Sobald der Förderantrieb wieder anläuft und der Kunststofffaden K wieder transportiert wird, werden das Umformglied 7 und das Führungsglied 9 in die gewünschten Positionen wieder zugestellt.

Bei einem nicht dargestellten Ausführungsbeispiel der Erfindung ist lediglich das Umformglied 7 vorgesehen, um die Kaltumformung des Kunststofffadens K zu erzielen. Auf ein Führungsglied 9 wird verzichtet. Auch mit lediglich einem einzelnen Umformglied 7 ist es möglich, gemeinsam mit einem Stellglied 11 zur Erzeugung einer entsprechenden Wendelsteigung eine Wendel W herzustellen. Die Positionierung des Umformgliedes 7 muss bei dieser Ausführungsform gegenüber der Darstellung nach Fig. 1 variiert werden. Vorzugsweise weist hier das Umformglied 7 einen etwas größeren Abstand zu dem Auslaufbereich des Zuführkanals 4 auf wie bei der Ausführung mit Führungsglied. Auch der Winkel, in dem das Umformglied 7 relativ zu der Fadentransportachse F ausgerichtet ist, muss entsprechend verändert sein.

Wie anhand der Fig. 2 erkennbar ist, ist es möglich, die Windevorrichtung mit einer Blattbindevorrichtung zu kombinieren, bei der die kontinuierlich hergestellte Wendel W gleichmäßig in Perforierungen P eines Blattblockes B eingebunden wird. Hierzu ist der Blattblock B innerhalb der Blattbindevorrichtung derart ausgerichtet, dass ein entsprechender Aufnahmebereich der Blattbindevorrichtung für den Blattblock B in koaxialer Verlängerung zu der Wendelachse D und damit zu dem Wendelformbereich der Windevorrichtung ausgerichtet ist. Die Perforierungen P sind so auf die Wendelsteigung abgestimmt, dass die Wendel W durch eine Drehung um die Wendelachse D allmählich in die Perforierungen eingeschraubt werden kann. Hierdurch wird zwangsläufig die gewünschte Bindung des aus einer Vielzahl von losen Blättern bestehenden Blattblockes B erreicht. Sobald die entsprechende Wendel W in die Perforierungen P des Blattblockes B über die gesamte Länge des Blattblockes B eingeschraubt ist, muss die Wendel W abgeschnitten werden. Hierzu ist eine lediglich schematisch dargestellte Trenneinheit 12 vorgesehen. Die Steuereinheit S kann so ausgelegt sein, dass sie neben der automatischen Wendelherstellung auch eine automatische Einbindung der Wendeln W in entsprechende Blattrücken entsprechender Blattblöcke B ermöglicht.

## Patentansprüche

1. Verfahren zur Herstellung von Kunststoffwendeln (W) aus einem Kunststofffaden (K) bei dem
- der Kunststofffaden (K) von einer Einlaufeinheit (1) einer Windevorrichtung einer Umformeinheit der Windevorrichtung zugeführt wird,
- in der Umformeinheit der Kunststofffaden (K) mittels wenigstens eines Umformgliedes (7), das eine Führungsfläche für den Kunststofffaden (K) aufweist, zu der Wendel (W) geformt wird,
- die Führungsfläche des in Fadenlaufrichtung unmittelbar nach der Einlaufeinheit (1) angeordneten Umformgliedes (7) außenseitig an dem Kunststofffaden anliegt,
- das Umformglied (7) derart geneigt zu einer Fadentransportachse (F) der Einlaufeinheit (1) ausgerichtet ist, dass der Kunststofffaden (K) mit einem Krümmungsradius kontinuierlich umgeformt wird, der größer ist als ein Querschnittsradius des Kunststofffadens (K) und wesentlich kleiner als ein Wendelradius im fertiggestellten Zustand, insbesondere kleiner als die Hälfte des Wendelradius, und
- dass die Kunststoffwendel (W) durch kontinuierliche Kaltumformung aus wenigstens einem Kunststofffaden (K) hergestellt werden.

2. Verfahren nach Anspruch 1, **dadurch gekennzeichnet, dass** der Kunststofffaden (K) bei seiner Umformung in Umfangsrichtung ausschließlich außen geführt wird.

3. Windevorrichtung zur Durchführung eines Verfahrens nach Anspruch 1 oder 2 mit
- einer Einlaufeinheit (1), mittels der der Kunststofffaden (K) einer Umformeinheit zuführbar ist, in der der Kunststofffaden (K) mittels wenigstens eines Umformgliedes (7), das eine Führungsfläche für den Kunststofffaden (K) aufweist, zu der Wendel (W) formbar ist,
- das Umformglied (7) in Fadenlaufrichtung unmittelbar nach der Einlaufeinheit (1) angeordnet ist, und
- die Führungsfläche des Umformgliedes (7) außenseitig an dem Kunststofffaden (K) anliegt,
**dadurch gekennzeichnet, dass**
- die Führungsfläche des Umformgliedes (7) derart geneigt zu einer Fadentransportachse (F) der Einlaufeinheit (1) ausgerichtet ist, dass der Kunststofffaden (K) mit einem Krümmungsradius kontinuierlich umformbar ist, der größer ist als ein Querschnittsradius des Kunststofffadens (K) und wesentlich kleiner als ein Wendelradius im fertiggestellten Zustand, insbesondere kleiner als die Hälfte des Wendelradius, und
- dass ein Stellglied (11) zum Einstellen einer Steigung der Wendel (W) vorgesehen ist.

4. Windevorrichtung nach Anspruch 3, **dadurch gekennzeichnet, dass** ein außenseitig an dem Kunststofffaden angreifendes Führungsglied (9) im Bereich eines ersten Windungsganges der Wendel (W) vorgesehen ist, das relativ zu einer Wendelachse (D) einen größeren Achsabstand aufweist als die Führungsfläche des Umformgliedes (7), wobei der Achsabstand geringer ist als der Radius der fertiggestellten Wendel (W).

5. Windevorrichtung nach Anspruch 3 oder 4, **dadurch gekennzeichnet, dass** das Umformglied (7) mittels einer Ausrückeinrichtung (8) derart beweglich gelagert ist, dass das Umformglied (7) so weit von der Wendel (W) wegbeweglich ist, dass das Umformglied (7) die Wendel (W) berührungslos frei gibt.

6. Windevorrichtung nach einem der vorhergehenden Ansprüche 3 bis 5, **dadurch gekennzeichnet, dass** eine Steuereinheit (S) vorgesehen ist, die eine Verstellung des Umformgliedes (7) und/oder eine Verstellung des Führungsgliedes (9) und/oder eine Verstellung des Stellgliedes (11) einzeln oder gemeinsam vornimmt.

7. Windevorrichtung nach Anspruch 3, **dadurch gekennzeichnet, dass** die Einlaufeinheit (1) ein Einlaufrollenpaar (2, 3) aufweist, das den Kunststofffadens (K) transportiert, wobei wenigstens eine Einlaufrolle mit einer Anlagefläche (13) mit hohem Reibungskoeffizient versehen ist.

8. Windevorrichtung nach Anspruch 7, **dadurch gekennzeichnet, dass** die Anlagefläche (13) einen Reibbelag aufweist.

9. Windevorrichtung nach Anspruch 7, **dadurch gekennzeichnet, dass** die Ablagefläche durch eine mechanische Oberflächenprofilierung gebildet ist.

10. Windevorrichtung nach Anspruch 7, **dadurch gekennzeichnet, dass** wenigstens eine Einlaufrolle (2) orthogonal zu der Fadentransportachse (F) beweglich gelangert ist, und dass der Einlaufrolle (2) eine Kraftsteuereinrichtung (5, 6) zugeordnet ist, die eine einstellbare Anpresskraft der Einlaufrolle (2) auf den Kunststofffaden (K) ausübt.

11. Windevorrichtung nach Anspruch 3, **dadurch gekennzeichnet, dass** eine Blattbindevorrichtung vorgesehen ist, die Mittel zum schraubenartigen Eindrehen von Fadenwendeln in Perforierungen von Blattrücken aufweist, und dass die Blattbindevorrichtung derart benachbart zu der Windevorrichtung positioniert ist, dass ein Aufnahmebereich der Blattbindevorrichtung, dem die Eindrehmittel zugeordnet sind, in koaxialer Verlängerung zu einem Wendelformbereich der Windevorrichtung angeordnet ist.

12. Windevorrichtung nach einem der vorhergehenden Ansprüche 3 bis 11, **dadurch gekennzeichnet, dass** Sensormittel zum Erfassen der fertiggestellten Wendellänge vorgesehen sind.

13. Windevorrichtung nach Anspruch 12, **dadurch gekennzeichnet dass** eine Trenneinheit (12) zum Ablängen von Wendeln (W) vorgesehen ist.

## Claims

1. Method for production of plastic helixes (W) from a plastic filament (K) in which
- the plastic filament (K) is supplied from an input unit (1) of a winding apparatus to a shaping unit of the winding apparatus,
- in the shaping unit, the plastic filament (K) is shaped into the helix (W) by means of at least one shaping element (7), which has a guide surface for the plastic filament (K),
- the guide surface of the shaping element (7), which is arranged immediately after the input unit (1) in the filament running direction, bears on the outside of the plastic filament,
- the shaping element (7) is aligned so as to be inclined with respect to a filament transport axis (F) of the input unit (1) such that the plastic filament (K) can be shaped continuously with a radius of curvature which is greater than a cross-sectional radius of the plastic filament (K) and is substantially smaller than a helix radius in the finished state, in particular smaller than half the helix radius, and
- the plastic helix (W) is produced from at least one plastic filament (K) by means of continuous cold shaping.

2. Method according to Claim 1, **characterized in that** the plastic filament (K) is guided exclusively on its outside in the circumferential direction during its shaping.

3. Winding apparatus for carrying out a method according to Claim 1 or 2 having
- an input unit (1), by means of which the plastic filament (K) can be supplied to a shaping unit, in which the plastic filament (K) can be shaped into the helix (W) by means of at least one shaping element (7) which has a guide surface for the plastic filament (K),
- the shaping element (7) is arranged immediately after the input unit (1) in the filament running direction, and
- the guide surface of the shaping element (7) bears on the outside of the plastic filament (K),
**characterized in that**
- the guide surface of the shaping element (7) is aligned so as to be inclined with respect to a filament transport axis (F) of the input unit (1) such that the plastic filament (K) can be shaped continuously with a radius of curvature which is greater than a cross-sectional radius of the plastic filament (K) and is substantially smaller than a helix radius in the finished state, in particular smaller than half the helix radius, and
- that an actuating element (11) for setting a pitch of the helix (W) is provided.

4. Winding apparatus according to Claim 3, **characterized in that** a guide element (9) acting on the outside of the plastic filament is provided in a first turn of the helix (W) and, relative to a helix axis (D), has a greater axial spacing than the guide surface of the shaping element (7), the axial spacing being less than the radius of the finished helix (W).

5. Winding apparatus according to Claim 3 or 4, **characterized in that** the shaping element (7) is mounted such that it can be moved by means of a disengagement device (8) in such a way that the shaping element can be moved so far away from the helix (W) that the shaping element (7) releases the helix (W) without contact.

6. Winding apparatus according to one of the preceding Claim 3 to 5, **characterized in that** a control unit (S) is provided, which performs a displacement of the shaping element (7) and/or a displacement of the guide element (9) and/or a displacement of the actuating element (11), individually or jointly.

7. Winding apparatus according to Claim 3, **characterized in that** the input unit (1) has a pair of inlet rollers (2, 3) which transport the plastic filament (K), at least one input roller being provided with a contact surface (13) with a high coefficient of friction.

8. Winding apparatus according to Claim 7, **characterized in that** the contact surface (13) has a frictional coating.

9. Winding apparatus according to Claim 7, **characterized in that** the contact surface is provided by means of mechanical surface profiling.

10. Winding apparatus according to Claim 7, **characterized in that** at least one input roller (2) is mounted such that it can be moved orthogonally in relation to the filament transport axis (F), and **in that** the input roller (2) is assigned a force control device (5, 6) which exerts an adjustable contact force of the input roller (2) on the plastic filament (K).

11. Winding apparatus according to Claim 3, **characterized in that** a sheet binding apparatus is provided, which has means for the helical twisting of filament helixes into perforations in sheet spines, and **in that** the sheet binding apparatus is positioned adjacent to the winding apparatus in such a way that a holding region of the sheet binding apparatus, to which the twisting means are assigned, is arranged in coaxial extension of a helix-shaping region of the winding apparatus.

12. Winding apparatus according to one of the preceding Claims 3 to 11, **characterized in that** sensor means for registering the finished helix length are provided.

13. Winding apparatus according to Claim 12, **characterized in that** a separating unit (12) is provided to cut helixes (W) to length.

## Revendications

1. Procédé de fabrication d'éléments formant spirales synthétiques (W) constitués d'un filament synthétique (K), dans lequel :
- le filament synthétique (K) est acheminé depuis une unité d'entrée (1) d'un dispositif d'enroulement à une unité de mise en forme du dispositif d'enroulement,
- dans l'unité de mise en forme, le filament synthétique (K) est formé en spirale (W) au moyen d'au moins un organe de mise en forme (7) qui présente une surface de guidage pour les filaments synthétiques (K),
- la surface de guidage de l'organe de mise en forme (7) disposée dans la direction d'avance du filament directement après l'unité d'entrée (1) s'applique du côté extérieur contre le filament synthétique,
- l'organe de mise en forme (7) est orienté de manière inclinée par rapport à un axe de transport de filament (F) de l'unité d'entrée (1) de telle sorte que le filament synthétique (K) soit mis en forme en continu avec un rayon de courbure qui est supérieur à un rayon de section transversale du filament synthétique (K) et qui est sensiblement inférieur à un rayon de spirale dans l'état fini, notamment inférieur à la moitié du rayon de spirale, et
- que les spirales synthétiques (W) soient fabriquées par mise en forme continue à froid à partir d'au moins un filament synthétique (K).

2. Procédé selon la revendication 1, **caractérisé en ce que** le filament synthétique (K), lors de sa mise en forme, est guidé dans la direction périphérique exclusivement vers l'extérieur.

3. Dispositif d'enroulement pour mettre en oeuvre un procédé selon la revendication 1 ou 2, comprenant:
- une unité d'entrée (1) au moyen de laquelle le filament synthétique (K) peut être acheminé à une unité de mise en forme dans laquelle le filament synthétique (K) peut être formé en spirale (W) au moyen d'au moins un organe de mise en forme (7) qui présente une surface de guidage pour le filament synthétique (K),
- l'organe de mise en forme (7) étant disposé dans la direction d'avance du filament directement après l'unité d'entrée (1), et
- la surface de guidage de l'organe de mise en forme (7) s'appliquant du côté extérieur contre le filament synthétique (K),
**caractérisé en ce que**
- la surface de guidage de l'organe de mise en forme (7) est orientée de manière inclinée par rapport à un axe de transport de filament (F) de l'unité d'entrée (1) de telle sorte que le filament synthétique (K) puisse être mis en forme en continu avec un rayon de courbure qui est supérieur à un rayon de section transversale du filament synthétique (K) et qui est sensiblement inférieur à un rayon de spirale dans l'état fini, notamment inférieur à la moitié du rayon de spirale, et
- un organe de commande (11) est prévu pour ajuster un pas de la spirale (W).

4. Dispositif d'enroulement selon la revendication 3, **caractérisé en ce qu'**un organe de guidage (9) venant en prise du côté extérieur avec le filament synthétique est prévu dans la région d'un premier pas d'enroulement de la spirale (W), lequel présente par rapport à un axe de spirale (D) une plus grande distance axiale que la surface de guidage de l'organe de mise en forme (7), la distance axiale étant inférieure au rayon de la spirale finie (W).

5. Dispositif d'enroulement selon la revendication 3 ou 4, **caractérisé en ce que** l'organe de mise en forme (7) est monté de manière déplaçable au moyen d'un dispositif de débrayage (8) de telle sorte que l'organe de mise en forme (7) puisse être écarté de la spirale (W) dans une mesure telle que l'organe de mise en forme (7) libère la spirale (W) sans contact.

6. Dispositif d'enroulement selon l'une quelconque des revendications 3 à 5, **caractérisé en ce que** l'on prévoit une unité de commande (S) qui effectue un réglage de l'organe de mise en forme (7) et/ou un réglage de l'organe de guidage (9) et/ou un réglage de l'organe de commande (11) individuellement ou en commun.

7. Dispositif d'enroulement selon la revendication 3, **caractérisé en ce que** l'unité d'entrée (1) présente une paire de rouleaux d'entrée (2, 3) qui transporte le filament synthétique (K), au moins un rouleau d'entrée étant pourvu d'une surface d'appui (13) ayant un coefficient de frottement élevé.

8. Dispositif d'enroulement selon la revendication 7, **caractérisé en ce que** la surface d'appui (13) présente une garniture de friction.

9. Dispositif d'enroulement selon la revendication 7, **caractérisé en ce que** la surface d'appui est formée par un profilage mécanique de la surface.

10. Dispositif d'enroulement selon la revendication 7, **caractérisé en ce qu'**au moins un rouleau d'entrée (2) est monté de manière déplaçable perpendiculairement à l'axe de transport du filament (F), et **en ce que** le rouleau d'entrée (2) est associé à un dispositif de commande de force (5, 6) qui exerce une force de pression ajustable du rouleau d'entrée (2) sur le filament synthétique (K).

11. Dispositif d'enroulement selon la revendication 3, **caractérisé en ce que** l'on prévoit un dispositif de reliure de feuilles qui présente des moyens pour enfoncer comme une vis des spires de filament dans des perforations au dos de feuilles, et **en ce que** le dispositif de reliure de feuilles est positionné à côté du dispositif d'enroulement de telle sorte qu'une région de réception du dispositif de reliure de feuilles à laquelle sont associés les moyens d'enfoncement, soit disposée dans le prolongement axial d'une région de formation de spire du dispositif d'enroulement.

12. Dispositif d'enroulement selon l'une quelconque des revendications 3 à 11, **caractérisé en ce que** des moyens de détection sont prévus pour détecter la longueur de spirale finie.

13. Dispositif d'enroulement selon la revendication 12, **caractérisé en ce qu'**une unité de séparation (12) est prévue pour couper en longueur les spirales (W).
